# EUROPÄISCHE PATENTANMELDUNG

(11) **EP 4 671 554 A1**
(43) Veröffentlichungstag der Anmeldung: **31.12.2025**
(21) Anmeldenummer: 25181294.7
(22) Anmeldetag: 06.06.2025
(51) Int. Cl.: F16C 23/04, F16C 25/04, F16C 11/06, B61F 5/14

(54) **GELENKLAGER FÜR EIN SCHIENENFAHRZEUG**

(30) Priorität: 25.06.2024 DE 102024205876
(71) Anmelder: ZF Friedrichshafen AG, 88046 Friedrichshafen (DE)
(72) Erfinder: Jung, Frank, 27232 Sulingen (DE)
(74) Vertreter: ZF Friedrichshafen AG

(57) **Zusammenfassung**

Die Erfindung betrifft ein Gelenklager (1) für ein Schienenfahrzeug, umfassend einen sphärischen Lagerabschnitt (2), der von einer ersten Lagerschale (3) und einer zweiten Lagerschale (4) umfasst ist, die in einem den Lagerabschnitt (2) und die beiden Lagerschalen (3, 4) umgebenden hohlzylindrischen Gelenkgehäuse (6) angeordnet sind, wobei der Lagerabschnitt (2) und die beiden Lagerschalen (3, 4) aus einem Metall bestehen, wobei die erste und die zweite Lagerschale (3, 4) durch einen ringförmigen Spalt (9), der sich zwischen einander zugewandten Stirnflächen (10) der beiden Lagerschalen (3, 4) ausbildet, zueinander beabstandet sind, wobei das Gelenkgehäuse (6) innenseitig einen umlaufenden radialen Stützabschnitt (11) mit einer axialen Stirnfläche (12) aufweist, an der sich die erste Lagerschale (3) mit ihrer dem Stützabschnitt (11) zugewandten axialen äußeren Stirnfläche (14) abstützt, wobei zwischen der ersten Lagerschale (3) und der axialen Stirnfläche (12) des Stützabschnitts (11) ein die erste Lagerschale (3) mit einer axialen Vorspannung beaufschlagendes, ringförmiges elastisches Vorspannelement (15) angeordnet ist, wobei die zweite Lagerschale (4) durch ein im Gelenkgehäuse (6) angeordnetes ringförmiges Sicherungselement (16) axial gehalten ist.

## Beschreibung

Die Erfindung betrifft ein Gelenklager für ein Schienenfahrzeug gemäß dem Oberbegriff des Anspruches 1.

Ein Gelenklager der eingangs genannten Art ist aus der DE 10 2004 014 774 A1 bekannt. Das Gelenklager gemäß der DE 10 2004 014 774 A1 wird als Gelenkverbindung sowohl zwischen Wagenkasten und Drehgestell eines Schienenfahrzeugs, als auch im Bereich des Drehgestells selbst angeordnet. Das Gelenklager kann unter anderem als Spurstange oder Stabilisator ausgeführt sein. Diese ermöglichen es beispielsweise, der während der Fahrt auftretenden Rollbewegung des Wagenkastens, also der Schwenkbewegung des Wagenkastens um die Fahrzeuglängsrichtung, entgegenzuwirken. Das Gelenklager muss Schwenk-, Kipp- und Nickbewegungen ermöglichen und gleichzeitig Zug- und Druckkräfte übertragen können. Ein derartiger Einsatz erfordert eine Spielfreiheit sowohl in radialer als auch in axialer Richtung, um Geräuschbildungen zu vermeiden. Das Gelenklager weist ein Anschlussbauteil auf, in welchem ein zweigeteilter Außenring angeordnet ist, welcher einen sphärischen Lagerabschnitt aufnimmt. Zwischen dem zweigeteilten Außenring und dem Lagerabschnitt ist eine Gleitmaterialschicht angeordnet. Zur Erzeugung einer Vorspannung ist an jeder dem Lagerabschnitt abgewandten äußeren Stirnseite der Außenringteile eine Tellerfeder angeordnet, die sich an einem Sprengring oder einem Armierungsring abstützt. Eine weitere Ausführungsform sieht vor, dass eine Außenhülse in das Anschlussbauteil eingesetzt ist, wobei in der Außenhülse der Lagerabschnitt, die diese aufnehmenden Außenringteile, die Tellerfedern sowie die diesen zugeordneten Sprengringe angeordnet sind.

Ausgehend vom vorstehend beschriebenen Stand der Technik ist es nun die Aufgabe der vorliegenden Erfindung, ein Gelenklager für ein Schienenfahrzeug der eingangs genannten Art weiterzubilden, welches sich durch eine Vereinfachung des Aufbaus des Gelenklagers auszeichnet, insbesondere durch eine Reduzierung von erforderlichen Bauteilen.

Diese Aufgabe wird durch ein Gelenklager ausgehend vom Oberbegriff des Anspruchs 1 in Verbindung mit dessen kennzeichnenden Merkmalen gelöst. Die hierauf jeweils folgenden, abhängigen Ansprüche geben jeweils vorteilhafte Weiterbildungen der Erfindung wieder.

Gemäß der Erfindung wird ein Gelenklager für ein Schienenfahrzeug vorgeschlagen, wobei das Gelenklager einen sphärischen Lagerabschnitt, der von einer ersten Lagerschale und einer zweiten Lagerschale umfasst ist, die in einem den Lagerabschnitt und die beiden Lagerschalen umgebenden hohlzylindrischen Gelenkgehäuse angeordnet sind, umfasst. Der Lagerabschnitt und die beiden Lagerschalen bestehen aus einem Metall. Der Lagerabschnitt und die beiden Lagerschalen stehen unmittelbar in Kontakt miteinander. Die erste Lagerschale und die zweite Lagerschale sind durch einen ringförmigen Spalt, der sich zwischen einander zugewandten Stirnflächen der beiden Lagerschalen ausbildet, zueinander axial beabstandet. Erfindungsgemäß ist vorgesehen, dass das Gelenkgehäuse einen umlaufenden radialen Stützabschnitt mit einer axialen Stirnfläche aufweist, an der sich die erste Lagerschale mit ihrer dem Stützabschnitt zugewandten axialen Stirnfläche abstützt, wobei zwischen der ersten Lagerschale und der axialen Stirnfläche des Stützabschnitts ein die erste Lagerschale mit einer axialen Vorspannung beaufschlagendes, ringförmiges elastisches Vorspannelement angeordnet ist, wobei die zweite Lagerschale durch ein im Gelenkgehäuse angeordnetes Sicherungselement axial gehalten ist.

Durch die auf die erste Lagerschale mittels des ringförmigen elastischen Vorspannelementes aufgebrachte permanente Vorspannung wird ein axiales Lagerspiel im Gelenklager bei einer für die Montage notwendigen Spielpassung minimiert, wodurch eine unerwünschte Geräuschbildung vermieden oder zumindest reduziert werden kann.

Die erste Lagerschale wird durch die permanente Vorspannung in Richtung Mittelpunkt des sphärischen Lagerabschnittes gelenkt. Zugleich werden der sphärische Lagerabschnitt und die zweite Lagerschale durch die Vorspannung gegen das die zweite Lagerschale axial haltende Sicherungselement gedrückt. Dies führt dazu, dass in einem radialen Lastbereich das passungsbedingte Spiel des Gelenklagers minimiert und die Geräuschbildung zumindest reduziert wird.

Die Anordnung des Vorspannelementes zwischen der ersten Lagerschale und der axialen Stirnfläche des Stützabschnitts des Gelenkgehäuses hat den Vorteil, dass eine Relativbewegung in Umfangsrichtung zwischen dem Vorspannelement und dem Gelenkgehäuse nicht stattfindet. Dies wirkt sich günstig auf das Verschleißverhalten des Vorspannelementes aus.

Der innenseitig am Gelenkgehäuse ausgebildete radiale Stützabschnitt kann sich abschnittsweise in Richtung des sphärischen Lagerabschnittes erstreckend oder von diesem weg erstreckend ausgebildet sein.

Der ringförmige Spalt, der sich zwischen der ersten Lagerschale und der zweiten Lagerschale ausbildet, kann als Schmiermittelreservoir des Gelenklagers dienen. Dies ist bei der aus einem Metall bestehenden Ausführung von Lagerabschnitt und den beiden Lagerschalen vorteilhaft.

Bevorzugt kann der radiale Stützabschnitt des Gelenkgehäuses, an dem sich die erste Lagerschale abstützt, als eine Schulter ausgebildet sein, die sich radial in Richtung des Lagerabschnittes erstreckt. Bei einer unmittelbaren Abstützung kann die erste Lagerschale auf der Schulter aufliegen. Auf der axialen Stirnfläche der Schulter können sich die erste Lagerschale und das zwischen der axialen Stirnfläche der Schulter und der ersten Lagerschale angeordnete Vorspannelement axial abstützen.

Insbesondere kann das Vorspannelement als ein O-Ring oder als eine ringförmige Flachdichtung ausgeführt sein. Die Ausführung des Vorspannelementes als Flachdichtung ist zur Vereinfachung der konstruktiven Ausführung des Gelenklagers besonders vorteilhaft.

Dabei kann in der axialen Stirnfläche der ersten Lagerschale eine Ringnut ausgebildet sein, in welcher der O-Ring aufgenommen ist.

Weiterhin kann die Ringnut eine Tiefe aufweisen, welche zumindest dem Radius des O-Ringes entspricht, wobei die Ringnut einen polygonalen oder kreisförmigen Querschnitt aufweisen kann.

Bei einer Ausführung des Vorspannelementes als ringförmige Flachdichtung, kann bevorzugt vorgesehen sein, dass die ringförmige Flachdichtung eine Shore-Härte von zumindest 85 Shore, insbesondere 90 Shore, aufweist.

Des Weiteren kann die ringförmige Flachdichtung einen Außendurchmesser aufweisen, welcher im Wesentlichen dem Innendurchmesser des die Lagerringe aufnehmenden Abschnitts des Gelenkgehäuses entspricht.

Gemäß einer Weiterbildung kann das Vorspannelement als zumindest eine Tellerfeder ausgeführt sein.

Insbesondere können zwei oder mehr Tellerfedern gleichsinnig oder wechselsinnig geschichtet im Bereich zwischen dem Stützabschnitt und der ersten Lagerschale angeordnet sein. Durch die Schichtung von zwei oder mehr Tellerfedern kann die Federkennlinie eingestellt werden. Durch eine gleichsinnige oder wechselsinnige Schichtung kann die Federkennlinie modifiziert werden.

Weiter bevorzugt kann die zumindest eine Tellerfeder geschlossen oder einseitig offen ausgeführt sein. Die Verwendung zumindest einer einseitig offen ausgeführten Tellerfeder weist den zusätzlichen Nutzen auf, dass diese die Funktion des Gelenkverschlusses übernehmen kann.

Insbesondere kann die zumindest eine Tellerfeder geschlitzt ausgeführt sein. Dabei kann eine geschlitzt ausgeführte Tellerfeder wegen der geringeren Vorspannung in solchen Gelenklagern zur Anwendung kommen, die geringeren axialen Belastungen ausgesetzt sind.

Gemäß einer bevorzugten Ausführung kann der radiale Stützabschnitt des Gelenkgehäuses, an dem sich die erste Lagerschale abstützt, von einer umlaufenden radialen

Nut im Gelenkgehäuse ausgebildet sein. Bei einer Abstützung in dem als Nut ausgeführten Stützabschnitt des Gelenkgehäuses kann sich die erste Lagerschale über das zwischen der axialen Stirnfläche der ersten Lagerschale und der axialen Stirnfläche der radialen Nut des Gelenkgehäuses angeordnete Vorspannelement abstützen.

Insbesondere kann die zumindest eine Tellerfeder in der radialen Nut im Gelenkgehäuse aufgenommen sein. Dadurch kann sich die erste Lagerschale mit ihrer axialen Stirnfläche an der zumindest einen Tellerfeder abstützten, welche wiederum mit der radialen Nut abschnittsweise in Eingriff steht und sich dabei an der axialen Stirnfläche der radialen Nut abstützt.

Gemäß einer vorteilhaften Weiterbildung kann das ringförmige Sicherungselement als ein Sprengring oder eine offene Tellerfeder ausgeführt sein, welcher bzw. welche in eine axial zum radialen Stützabschnitt beabstandete, oberhalb der zweiten Lagerschale angeordneten Ringnut im Gelenkgehäuse eingesetzt ist.

Die Ausführung des radialen Stützabschnitts als umlaufende radiale Nut hat den Vorteil, dass das Gelenkgehäuse spiegelsymmetrisch bezüglich einer Ebene ausgebildet sein kann, die senkrecht zur Erstreckungsrichtung des Gelenkgehäuses verläuft. Dabei kann die spiegelbildlich im Bereich oberhalb der zweiten Lagerschale ausgebildete Ringnut der Aufnahme des ringförmigen Sicherungselementes dienen.

Ein Vorteil der Ausführung des Sicherungselementes als offene Tellerfeder besteht darin, dass diese in Kombination mit einer Ausführung des Vorspannelementes als O-Ring oder als ringförmige Flachdichtung im Gelenkgehäuse vorgesehen sein kann. Dabei stützt sich die erste Lagerschale mittels des O-Ringes oder der Flachdichtung als Vorspannelement an dem als Schulter ausgeführten radialen Stützabschnitt des Gelenkgehäuses ab und wird durch den O-Ring oder die Flachdichtung axial vorgespannt. Gegenüberliegend kann in der der Aufnahme des ringförmigen Sicherungselementes dienenden Ringnut die offene Tellerfeder angeordnet sein, welche die zweite Lagerschale mit einer gegensätzlichen axialen Vorspannkraft beaufschlagt, um auch die zweite Lagerschale gegen den sphärischen Lagerabschnitt zu pressen.

Bevorzugt kann das das Gelenklager als Pratzengelenk oder Molekulargelenk ausgebildet sein.

Das Gelenklager kann Teil einer Drehmomentstütze oder eine Pendelstütze sein, die Bestandteil eines Fahrwerks eines Schienenfahrzeugs sind.

Die Erfindung ist nicht auf die angegebene Kombination der Merkmale der nebengeordneten oder der hiervon abhängigen Ansprüche beschränkt. Es ergeben sich darüber hinaus Möglichkeiten, einzelne Merkmale, auch soweit sie aus den Ansprüchen, der nachfolgenden Beschreibung bevorzugter Ausführungsformen der Erfindung oder unmittelbar aus den Zeichnungen hervorgehen, miteinander zu kombinieren. Die Bezugnahme der Ansprüche auf die Zeichnungen durch Verwendung von Bezugszeichen soll den Schutzumfang der Ansprüche nicht beschränken.

Eine vorteilhafte Ausführungsform der Erfindung, die nachfolgend erläutert wird, ist in den Zeichnungen dargestellt. Es zeigt:
- Fig. 1: schematisch und exemplarisch einen Querschnitt durch ein Gelenklager für ein Schienenfahrzeug;
- Fig. 2: schematisch und exemplarisch einen Querschnitt durch das Gelenklager gemäß einer Ausführungsform;
- Fig. 3: schematisch und exemplarisch einen Querschnitt durch das Gelenklager gemäß einer weiteren Ausführungsform;
- Fig. 4: eine Schnittansicht einer Tellerfeder;
- Fig. 5: eine perspektivische Ansicht einer einseitig offen ausgeführten Tellerfeder;
- Fig. 6: exemplarisch eine Draufsicht auf eine geschlitzt ausgeführte Tellerfeder; und
- Fig. 7: schematisch und exemplarisch einen Querschnitt durch das Gelenklager gemäß einer weiteren Ausführungsform.

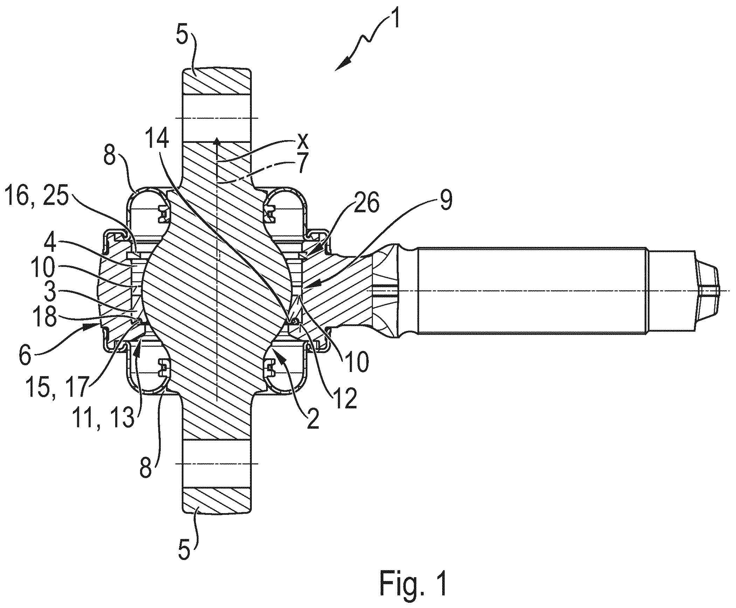

In Fig. 1 ist schematisch und exemplarisch ein Querschnitt durch ein erfindungsgemäßes Gelenklager 1 für ein Schienenfahrzeug dargestellt. Das Gelenklager 1 umfasst einen sphärischen respektive kugelförmigen Lagerabschnitt 2, der von einer ersten Lagerschale 3 und einer zweiten Lagerschale 4 umfasst ist. An den sphärischen Lagerabschnitt 2 schließen sich zwei in axialer Richtung erstreckende Funktionsabschnitte 5 an, welche der Verbindung eines Wagenkastens und eines Drehgestells eines Schienenfahrzeugs dienen können. Der sphärische Lagerabschnitt 2 und die beiden Lagerschalen 3, 4 bestehen aus einem Metall.

Das Gelenklager 1 umfasst weiterhin ein hohlzylindrisches Gelenkgehäuse 6. In dem Gelenkgehäuse 6 sind der sphärische Lagerabschnitt 2 und die diesen umfassende erste Lagerschale 3 und zweite Lagerschale 4 angeordnet. Das Gelenkgehäuse 6 sowie die erste Lagerschale 3 und die zweite Lagerschale 4 sind koaxial zur Längsachse 7 des sphärischen Lagerabschnitts 2 angeordnet.

Das Gelenkgehäuse 6 kann an seinen gegenüberliegenden Enden durch Balgelemente 8 gegen ein Eindringen von Verschmutzungen, Feuchtigkeit und dergleichen verschlossenen sein.

Die erste Lagerschale 3 und die zweite Lagerschale 4 sind durch einen ringförmigen Spalt 9, der sich zwischen einander zugewandten, inneren Stirnflächen 10 der beiden Lagerschalen 3, 4 ausbildet, zueinander axial beabstandet. Der ringförmige Spalt 9, der sich zwischen der ersten Lagerschale 3 und der zweiten Lagerschale 4 ausbildet, kann insbesondere als Schmiermittelreservoir des Gelenklagers 1 dienen. Die erste Lagerschale 3 und die zweite Lagerschale 4 können bevorzugt als Gleichteile ausgeführt sein.

Das Gelenkgehäuse 6 weist innenseitig einen umlaufenden radialen Stützabschnitt 11 mit einer axialen Stirnfläche 12 auf. Die axiale Stirnfläche 12 ist der ersten Lagerschale 4 zugewandt. An der axialen Stirnfläche 12 des radialen Stützabschnitts 11 stützt sich die erste Lagerschale 3 mit ihrer äußeren, dem Stützabschnitt 11 zugewandten axialen Stirnfläche 14 ab.

Zwischen der ersten Lagerschale 3 und der axialen Stirnfläche 12 des radialen Stützabschnitts 11 ist ein die erste Lagerschale 3 mit einer axialen Vorspannung beaufschlagendes ringförmiges elastisches Vorspannelement 15 angeordnet. Die zweite Lagerschale 4 ist durch ein in dem Gelenkgehäuse 6 angeordnetes ringförmiges Sicherungselement 16 axial gehalten.

Der innenseitig am Gelenkgehäuse 6 ausgebildete radiale Stützabschnitt 11 kann sich gemäß der in Fig. 1 dargestellten Ausführungsform in Richtung des sphärischen Lagerabschnittes 2 erstrecken.

Bevorzugt kann der radiale Stützabschnitt 11 des Gelenkgehäuses 6, an dem sich die erste Lagerschale 3 abstützt, als eine Schulter 13 ausgebildet sein, die sich abschnittsweise radial in Richtung des sphärischen Lagerabschnittes 2 erstreckt. Bei einer unmittelbaren Abstützung kann die erste Lagerschale 3 mit ihrer axialen Stirnfläche 14 zumindest abschnittsweise auf der Schulter 13 aufliegen. Auf der axialen Stirnfläche 12 der als radialer Stützabschnitt 11 ausgebildeten Schulter 13 können sich die erste Lagerschale 3 und das zwischen der axialen Stirnfläche 12 der Schulter 13 und der ersten Lagerschale 3 angeordnete Vorspannelement 15 axial abstützen.

Gemäß der in Fig. 1 dargestellten Ausführungsform ist das Vorspannelement 15 als ein O-Ring 17 ausgeführt. In der axialen Stirnfläche 14 der ersten Lagerschale 3 ist eine umlaufende Ringnut 18 ausgebildet, in welcher der O-Ring 17 abschnittsweise aufgenommen ist.

Die Ringnut 18 weist eine Tiefe auf, welche zumindest dem Radius des O-Ringes 17 entspricht, wobei die Ringnut 18 einen polygonalen oder kreisförmigen Querschnitt aufweisen kann.

Durch das als O-Ring 17 ausgeführte Vorspannelement 15 wird die erste Lagerschale 3 dauerhaft in axialer Richtung x gegen den sphärischen Lagerabschnitt 2 gepresst, wodurch ein axiales Spiel im Gelenklager 1 minimiert wird.

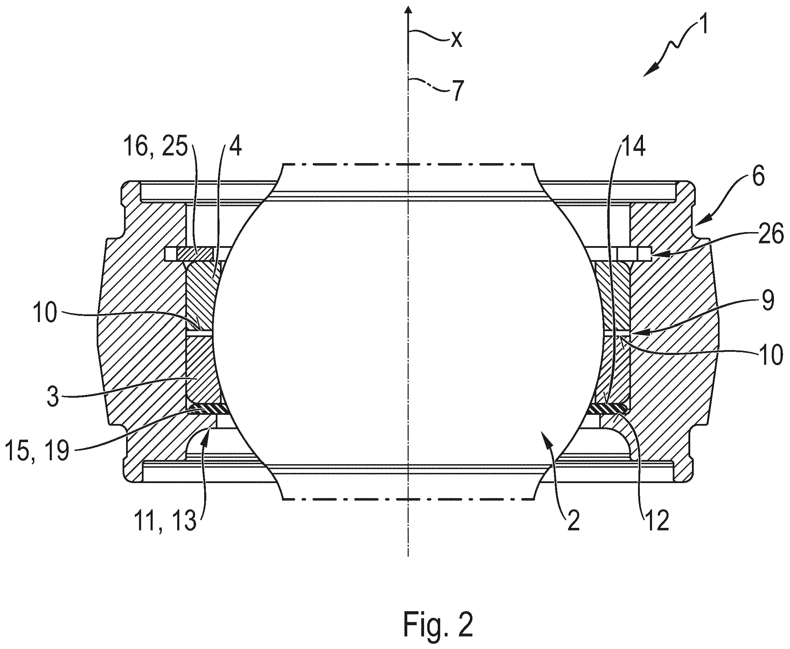

Die Darstellung in Fig. 2 zeigt schematisch und exemplarisch einen Querschnitt durch das Gelenklager 1 gemäß einer weiteren Ausführungsform. Die in Fig. 2 dargestellte Ausführungsform unterscheidet sich von der gemäß Fig. 1 durch die Ausführung des Vorspannelementes 15, welches hier und vorzugsweise als eine ringförmige Flachdichtung 19 ausgeführt ist.

Die ringförmige Flachdichtung 19 weist eine Shore-Härte von zumindest 85 Shore, insbesondere 90 Shore, auf. Die ringförmige Flachdichtung 19 liegt abschnittsweise auf der axialen Stirnfläche 12 der Schulter 13 auf und an der axialen Stirnfläche 14 der Lagerschale 3 an. Durch die Flachdichtung 19 wird die erste Lagerschale 3 mit einer axialen Vorspannung beaufschlagt. Nach dieser Ausführungsform kann die gemäß der in Fig. 1 dargestellten Ausführungsform vorgesehene Ringnut 18 in der axialen Stirnfläche 14 der ersten Lagerschale 3 entfallen. Die ringförmige Flachdichtung 19 weist einen Außendurchmesser auf, welcher im Wesentlichen dem Innendurchmesser des die Lagerschalen 3, 4 aufnehmenden Abschnitts des Gelenkgehäuses 6 entspricht.

Durch das als ringförmige Flachdichtung 19 ausgeführte Vorspannelement 15 wird die erste Lagerschale 3 in axialer Richtung x gegen den sphärischen Lagerabschnitt 2 gepresst, wodurch der Effekt der Minimierung des Lagerspiels im Gelenklager 1 erreicht wird.

Vorteilhaft bei einer Ausführung des Vorspannelements 15 als O-Ring 17 oder als Flachdichtung 19 ist, dass eine Relativbewegung in Umfangsrichtung zwischen dem Vorspannelement 15 und der axialen Stirnfläche 12 des radialen Stützabschnittes 11 nicht stattfindet, sodass ein gutes Verschleißverhalten zu erwarten ist.

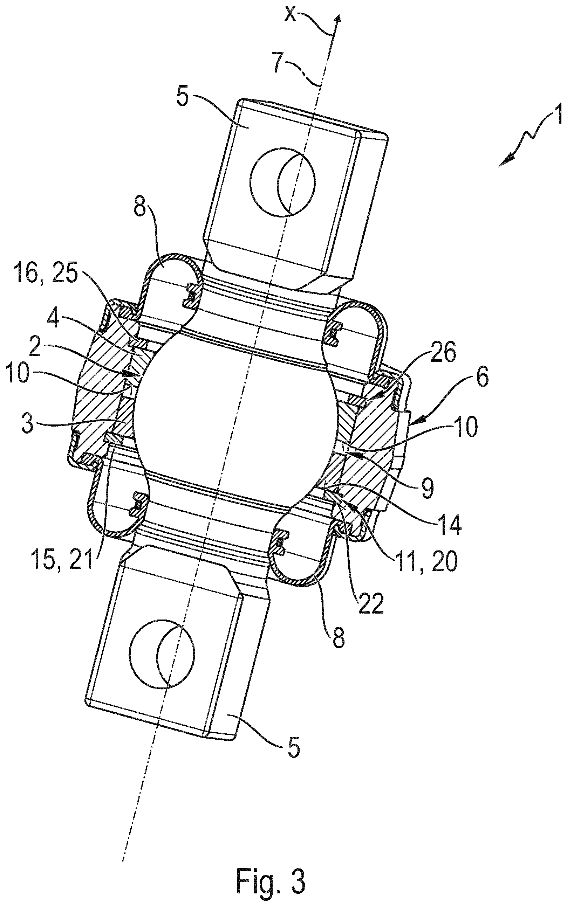

In Fig. 3 ist schematisch und exemplarisch ein Querschnitt durch das Gelenklager 1 gemäß einer weiteren Ausführungsform dargestellt. Der radiale Stützabschnitt 11 des Gelenkgehäuses 6, an dem sich die erste Lagerschale 3 axial abstützt, ist von einer umlaufenden radialen Nut 20 im Gelenkgehäuse 6 ausgebildet. Die Nut 20 weist analog zu dem als Schulter 13 ausgebildeten Stützabschnitt 11 eine axiale Stirnfläche 22 auf.

Das zwischen der ersten Lagerschale 3 und der axialen Stirnfläche 22 des als radialer Nut 20 ausgebildeten Stützabschnitts 11 angeordnete, die erste Lagerschale 3 mit einer axialen Vorspannung beaufschlagende, ringförmige elastische Vorspannelement 15 ist gemäß dieser Ausführungsform als zumindest eine Tellerfeder 21 ausgeführt. Die zumindest eine Tellerfeder 21 liegt aufgrund ihrer konischen Form mit ihrem äußeren Randbereich auf der axialen Stirnfläche 22 der Nut 20 auf und mit ihrem inneren Randbereich an der axialen Stirnfläche 14 der ersten Lagerschale 3 an. Hierdurch wird die erste Lagerschale 3 in axialer Richtung x gegen den sphärischen Lagerabschnitt 2 gepresst.

Gemäß einer Weiterbildung können zwei oder mehr Tellerfedern 21 gleichsinnig oder wechselsinnig geschichtet zwischen dem Stützabschnitt 11 des Gelenkgehäuses 6 und der ersten Lagerschale 3 angeordnet sind. Hierdurch lässt sich der Verlauf der Federkennlinie des Vorspannelementes 15 variieren.

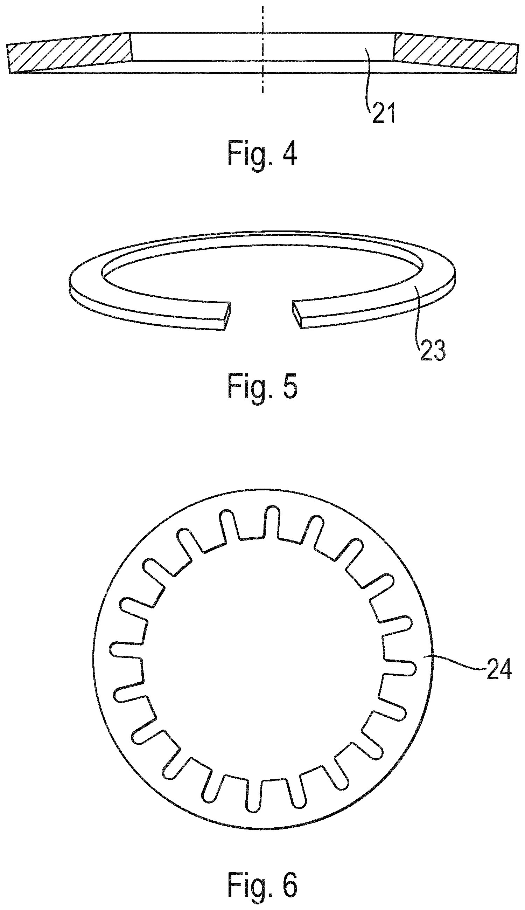

In den Fig. 4 bis 6 sind verschiedenen Ausgestaltungen von Tellerfedern 21 gezeigt.

In Fig. 4 ist eine Schnittansicht der zumindest einen Tellerfeder 21 gemäß Fig. 3 dargestellt, die geschlossen ausgeführt ist.

In Fig. 5 ist eine perspektivische Ansicht einer einseitig offen ausgeführten Tellerfeder 23 dargestellt. Die einseitig offen ausgeführte Tellerfeder 23 kann zusätzlich zu ihrer Funktion als Vorspannelement 15 dazu dienen, die Funktion des Gelenkverschlusses des Gelenklagers 1 übernehmen.

Die Darstellung in Fig. 6 zeigt exemplarisch eine Draufsicht auf eine geschlitzt ausgeführte Tellerfeder 24. Eine geschlitzte Tellerfeder 24 weist gegenüber der geschlossenen Tellerfeder 21 eine geringere Vorspannung auf und kann im Fall kleinerer Belastungen im Gelenklager 1 angewendet werden.

Das ringförmige Sicherungselement 16 kann als ein Sprengring 25 oder die einseitig offene Tellerfeder 23 ausgeführt sein. Der Sprengring 25 bzw. die einseitig offene Tellerfeder 23 ist in eine axial zum radialen Stützabschnitt 11 beabstandete, oberhalb der zweiten Lagerschale 4 angeordneten Ringnut 26 im Gelenkgehäuse 6 eingesetzt.

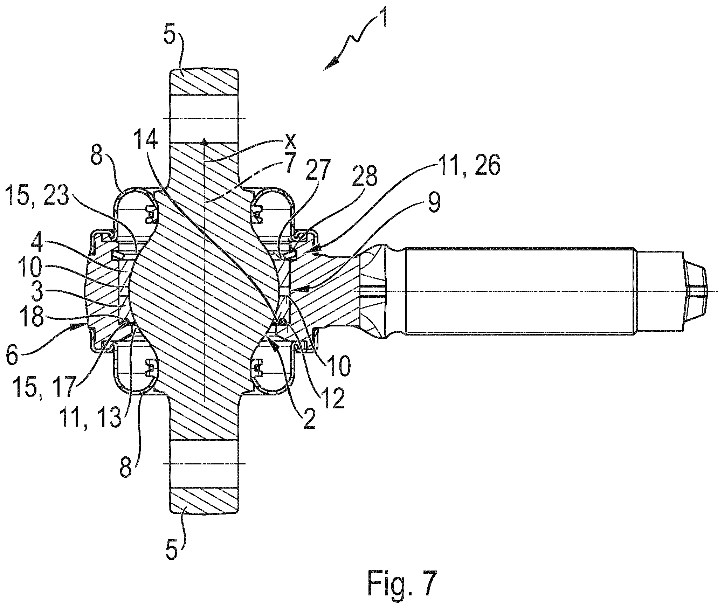

Die Darstellung in Fig. 7 zeigt schematisch und exemplarisch einen Querschnitt durch das Gelenklager 1 gemäß einer weiteren Ausführungsform. Dabei handelt es sich um eine Kombination der Ausführung des radialen Stützabschnittes 11 als Schulter 13, an der sich die erste Lagerschale 3 mittels des als O-Ring 17 ausgeführten Vorspannelementes 15 abstützt, wie in Fig. 1 dargestellt ist, und zusätzlich als umlaufende radiale Nut 20, wie in Fig. 3 dargestellt, die oberhalb der zweiten Lagerschale 4 im Gelenkgehäuse 6 angeordnet ist. Gemäß dieser alternativen Ausführungsform werden beide Lagerschalen 3, 4 durch jeweils ein Vorspannelement 15, den O-Ring 17 oder alternativ die Flachdichtung 19 und die Tellerfeder 23 mit einer Vorspannkraft beaufschlagt, welche die jeweilige Lagerschale 3, 4 in axialer Richtung x gegen den sphärischen Lagerabschnitt 2 presst. Die Vorspannkräfte der beiden voneinander abweichend ausgeführten Vorspannelemente 15 sind in entgegengesetzter Richtung orientiert.

Das zwischen der zweiten Lagerschale 4 und der axialen Stirnfläche 22 der radialen Nut 20 angeordnete, die zweite Lagerschale 4 mit einer axialen Vorspannung beaufschlagende Vorspannelement 15, ist als eine einzelne, offene Tellerfeder 23 ausgeführt. Neben der Funktion, auch die zweite Lagerschale 4 mit einer axialen Vorspannkraft zu beaufschlagen, welche die zweite Lagerschale 4 in axialer Richtung x gegen den sphärischen Lagerabschnitt 2 presst, dient die Tellerfeder 23 zudem als Gelenkverschluss des Gelenklagers 1. Hierbei kann sich der Umstand zu Nutze gemacht werden, dass die der Aufnahme des Sicherungselementes 16 dienende Ringnut 26 zur Aufnahme der Tellerfeder 23 ausgeführt sein kann, d.h. in ihrer Funktion und Ausbildung der umlaufenden radialen Nut 20 entspricht.

Hierzu kann sich die zweite Lagerschale 4 mit ihrer dem als Ringnut 26 ausgeführten Stützabschnitt 11 zugewandten axialen äußeren Stirnfläche 27 abstützen. Die Tellerfeder 23 liegt aufgrund ihrer konischen Form mit ihrem äußeren Randbereich auf einer axialen Stirnfläche 28 der Ringnut 26 auf und mit ihrem inneren Randbereich an der axialen Stirnfläche 27 der zweiten Lagerschale 4 an.

### Bezugszeichen

- 1: Gelenklager
- 2: Lagerabschnitt
- 3: Erste Lagerschale
- 4: Zweite Lagerschale
- 5: Funktionsabschnitt
- 6: Gelenkgehäuse
- 7: Längsachse
- 8: Balgelement
- 9: Ringförmiger Spalt
- 10: Stirnfläche
- 11: Stützabschnitt
- 12: Stirnfläche
- 13: Schulter
- 14: Stirnfläche
- 15: Vorspannelement
- 16: Sicherungselement
- 17: O-Ring
- 18: Ringnut
- 19: Flachdichtung
- 20: Nut
- 21: Tellerfeder
- 22: Stirnfläche
- 23: Tellerfeder
- 24: Geschlitzte Tellerfeder
- 25: Sprengring
- 26: Ringnut
- 27: Stirnfläche
- 28: Stirnfläche

## Patentansprüche

1. Gelenklager (1) für ein Schienenfahrzeug, umfassend einen sphärischen Lagerabschnitt (2), der von einer ersten Lagerschale (3) und einer zweiten Lagerschale (4) umfasst ist, die in einem den Lagerabschnitt (2) und die beiden Lagerschalen (3, 4) umgebenden hohlzylindrischen Gelenkgehäuse (6) angeordnet sind, wobei der Lagerabschnitt (2) und die beiden Lagerschalen (3, 4) aus einem Metall bestehen, wobei die erste Lagerschale (3) und die zweite Lagerschale (4) durch einen ringförmigen Spalt (9), der sich zwischen einander zugewandten Stirnflächen (10) der beiden Lagerschalen (3, 4) ausbildet, zueinander beabstandet sind, **dadurch gekennzeichnet, dass** das Gelenkgehäuse (6) innenseitig einen umlaufenden radialen Stützabschnitt (11) mit einer axialen Stirnfläche (12) aufweist, an der sich die erste Lagerschale (3) mit ihrer dem Stützabschnitt (11) zugewandten axialen äußeren Stirnfläche (14) abstützt, wobei zwischen der ersten Lagerschale (3) und der axialen Stirnfläche (12) des Stützabschnitts (11) ein die erste Lagerschale (3) mit einer axialen Vorspannung beaufschlagendes, ringförmiges elastisches Vorspannelement (15) angeordnet ist, wobei die zweite Lagerschale (4) durch ein im Gelenkgehäuse (6) angeordnetes ringförmiges Sicherungselement (16) axial gehalten ist.

2. Gelenklager (1) nach Anspruch 1, **dadurch gekennzeichnet, dass** der radiale Stützabschnitt (11) des Gelenkgehäuses (6), an dem sich die erste Lagerschale (3) abstützt, als eine Schulter (13) ausgebildet ist, die sich radial in Richtung des Lagerabschnittes (2) erstreckt.

3. Gelenklager (1) nach Anspruch 1 oder 2, **dadurch gekennzeichnet, dass** das Vorspannelement (15) als ein O-Ring (17) oder als eine ringförmige Flachdichtung (19) ausgeführt ist.

4. Gelenklager (1) nach Anspruch 3, **dadurch gekennzeichnet, dass** in der axialen Stirnfläche (14) der ersten Lagerschale (3) eine umlaufende Ringnut (18) ausgebildet ist, in welcher der O-Ring (17) aufgenommen ist.

5. Gelenklager (1) nach Anspruch 4, **dadurch gekennzeichnet, dass** die Ringnut (18) eine Tiefe aufweist, welche zumindest dem Radius des O-Ringes (17) entspricht, wobei die Ringnut (18) einen polygonalen oder kreisförmigen Querschnitt aufweist.

6. Gelenklager (1) nach Anspruch 2, **dadurch gekennzeichnet, dass** die ringförmige Flachdichtung (19) eine Shore-Härte von zumindest 85 Shore, insbesondere 90 Shore, aufweist.

7. Gelenklager (1) nach Anspruch 2 oder 6, **dadurch gekennzeichnet, dass** die ringförmige Flachdichtung (19) einen Außendurchmesser aufweist, welcher im Wesentlichen dem Innendurchmesser des die Lagerschalen (3, 4) aufnehmenden Abschnitts des Gelenkgehäuses (6) entspricht.

8. Gelenklager (1) nach Anspruch 1, **dadurch gekennzeichnet, dass** das Vorspannelement (15) als zumindest eine Tellerfeder (21, 23, 24) ausgeführt ist.

9. Gelenklager (1) nach Anspruch 8, **dadurch gekennzeichnet, dass** zwei oder mehr Tellerfedern (21, 23, 24) gleichsinnig oder wechselsinnig geschichtet zwischen dem Stützabschnitt (11) des Gelenkgehäuses (6) und der ersten Lagerschale (3) angeordnet sind.

10. Gelenklager (1) nach Anspruch 8 oder 9, **dadurch gekennzeichnet, dass** die zumindest eine Tellerfeder (21, 23) geschlossen oder einseitig offen ausgeführt ist.

11. Gelenklager nach einem der Ansprüche 8 bis 10, **dadurch gekennzeichnet, dass** die zumindest eine Tellerfeder (24) geschlitzt ausgeführt ist.

12. Gelenklager (1) nach Anspruch 1 und einem der Ansprüche 8 bis 11, **dadurch gekennzeichnet, dass** der radiale Stützabschnitt (11) des Gelenkgehäuses (6), an dem sich die erste Lagerschale (3) abstützt, von einer umlaufenden radialen Nut (20) im Gelenkgehäuse (6) ausgebildet ist.

13. Gelenklager (1) nach Anspruch 12, **dadurch gekennzeichnet, dass** die zumindest eine Tellerfeder (21, 23, 24) in der umlaufenden radialen Nut (20) im Gelenkgehäuse (6) aufgenommen ist.

14. Gelenklager (1) nach einem der vorangehenden Ansprüche, **dadurch gekennzeichnet, dass** das ringförmige Sicherungselement (16) als ein Sprengring (25) oder eine offene Tellerfeder (23) ausgeführt ist, welcher bzw. welche in eine axial zum radialen Stützabschnitt (11) beabstandete, oberhalb der zweiten Lagerschale (4) angeordneten Ringnut (26) im Gelenkgehäuse (6) eingesetzt ist.

15. Gelenklager (1) nach einem der vorangehenden Ansprüche, **dadurch gekennzeichnet, dass** das Gelenklager (1) als Pratzengelenk oder Molekulargelenk ausgebildet ist.
